Europäisches Patentamt

European Patent Office

Office européen des brevets

(19)

(11) Veröffentlichungsnummer : **0 047 333**
**B1**

(12) **EUROPÄISCHE PATENTSCHRIFT**

(45) Veröffentlichungstag der Patentschrift :
03.08.83

(51) Int. Cl.³ : **C 11 B  1/10, B 01 D  11/02**

(21) Anmeldenummer : **80105359.6**

(22) Anmeldetag : **08.09.80**

(54) **Vorrichtung zum kontinuierlichen Beschicken von Extrakteuren mit Extrahiergut und Extraktionsmittel und ihre Verwendung.**

(43) Veröffentlichungstag der Anmeldung :
**17.03.82 Patentblatt 82/11**

(45) Bekanntmachung des Hinweises auf die Patenterteilung : **03.08.83 Patentblatt 83/31**

(84) Benannte Vertragsstaaten :
**BE DE FR GB IT NL**

(56) Entgegenhaltungen :
**CH A 355 769**
**FR A 2 197 631**
**US A 3 155 697**
**US A 4 096 057**

(73) Patentinhaber : **Schumacher, Heinz**
**Höperfeld 26**
**D-2050 Hamburg 80 (DE)**

(72) Erfinder : **Thiem, Heinz**
**Kleiner Sand 66**
**Uetersen/Schleswig-Holstein (DE)**
Erfinder : **Schumacher, Heinz**
**Höperfeld 26**
**D-2050 Hamburg 80 (DE)**

(74) Vertreter : **Kohler, Maria, Dr. et al**
**Dr. M. Kohler Dipl.-Ing. C. Gernhardt Dipl.-Ing.**
**J. Glaeser Patentanwälte Königstrasse 28**
**D-2000 Hamburg 50 (DE)**

# Vorrichtung zum kontinuierlichen Beschicken von Extrakteuren mit Extrahiergut und Extraktionsmittel und ihre Verwendung

Gegenstand der Erfindung ist eine Beschickungs- oder Füllvorrichtung für solche Extrakteure, bei denen im kontinuierlichen Durchsatz insbesondere ölhaltige pflanzliche Rohstoffe wie Ölsaat und Ölfrüchte mit einem organischen Löse- bzw. Extraktionsmittel behandelt und dabei die Glyceridbestandteile (Öle und Fette) in die extrahierte flüssige Phase übergeführt werden.

Als Extraktions- bzw. Lösemittel für Ölsaaten werden in der Technik praktisch nur Benzin, Hexan, Heptan, Octan oder deren Gemische mit Siedegrenzen von 60-100 °C eingesetzt, insbesondere wenn man Öle und Fette zu Speisezwecken verwenden will.

Vorrichtungen für kontinuierlich arbeitende Extraktionsprozesse sind weitgehend bekannt, wozu auf die einschlägige Fachliteratur verwiesen wird. Dabei handelt es sich nach neuesten Entwicklungen entweder um vertikal angeordnete Extraktionstürme mit oder ohne Rührelemente, oder um horizontal konstruierte Rahmenbandextrakteure, Schneckenextrakteure, Topfextrakteure, Anlagen mit endlosen Transportbändern, Becherwerkextrakteure, Korbextrakteure usw.

Praktisch alle technisch brauchbaren Verfahren arbeiten im Gegenstrom, d. h., das frische Extraktionsmittel wird zur Schlußspülung des bereits weitgehend extrahierten Materials verwendet. Dabei gehen dieser Endphase der Extraktion vielfach mehrere Quell-Wasch- und Extraktionsstufen voraus, bis schließlich eine Miscella anfällt, die je nach Extrakteur-Typ etwa 15-35 % Öl und 65-85 % Lösemittel enthält.

Im Anschluß an die Extraktion wird die Miscella, ggf. nach einer blanken Filtration und Klärung, destillativ bei niedrigen Temperaturen und vorwiegend indirekter Dampfbeheizung in Öl- und Lösemittel getrennt, was auf Grund der erheblichen Siedepunktunterschiede der Gemischbestandteile in zwei bis drei Stufen leicht möglich ist.

Wie allgemein bekannt, ist es für die Qualität eines pflanzlichen Öls, z. B. für Sojaöl von entscheidender Bedeutung, daß der Gehalt an Phosphatiden (Lezithin) so niedrig wie möglich ist.

Diese Phosphatide sowie die Fettbestandteile des Öls zeigen eine erhebliche Instabilität gegenüber Autoxidationserscheinungen. Hierdurch ist zum Beispiel u. a. das Ranzigwerden der Öle bedingt. Daß die Haltbarkeit von Speiseölen begrenzt ist, wobei oft schon nach wenigen Wochen durch eben die genannte Autoxidation bedingt, unter Ausbildung von ungesättigten Aldehyden usw. ein saatartiger Fremdgeschmack auftritt, ist seit langem bekannt.

Ausführliche Untersuchungen haben nun ergeben, daß derartige, auch die Phosphatide ergreifende Autoxidationsreaktionen — unabhängig von der Art des Extraktionsmittels oder der Arbeitsbedingungen während der Extraktion — immer sofort einsetzen, wenn das Extraktionsmittel mit dem zerkleinerten Saatgutmaterial in Anwesenheit von Luftsauerstoff in Berührung kommt, oder wenn beim Zerkleinern des Saatguts freie, oxidable Oberflächen gebildet werden.

Die Autoxidation der Phosphatide ist auf das Zusammenwirken von Sauerstoff und gewissen, im Saatgut vorhandenen prooxygenen Substanzen, insbesondere Enzymen, zurückzuführen.

Um den Einfluß derartiger Enzyme zu eliminieren, wurde bereits vorgeschlagen, das Saatgut vor der Extraktion einer Hitzebehandlung zu unterziehen. Zwar werden dabei die Enzyme (Katalasen) im wesentlichen zerstört und damit die Autoxidation vermindert, doch sind hierzu erhebliche verfahrenstechnische, apparatebauliche und energetische Aufwendungen notwendig, die in keinem Vergleich zum möglichen Erfolg stehen.

Auch durch Schwefelverbindungen lassen sich die speziellen, die Spaltung bzw. die Autoxidation der Phosphatide (Lezithin) bewirkenden Enzyme inaktivieren. Derartige Schwefelverbindungen sind in erheblichem Maße im rohen Saatgut vorhanden. Sie werden aber unwirksam, wenn durch erhebliche Hitzeeinwirkung, insbesondere im Luftstrom, auch in Gegenwart von leicht flüchtigen Lösemitteln (Hexan) eine zu schnelle Ableitung aus dem Prozeß in Form von $H_2S$, COS, Markaptanen usw. erfolgt.

Zusammenfassend ist somit die bisherige Technologie nicht in die Lage versetzt, die Autoxidation der Phosphatide (Lezithine) zu stoppen, weil einmal die Enzymzerstörung wirtschaftlich nicht vertretbar ist und zum andern das für die Autoxidation verantwortliche Zusammenwirken von Enzym und Sauerstoff nicht behoben wurde. Erhebliche technische Probleme bereicht auch das Arbeiten mit toxischen, leicht entflammbaren, niedrig siedenden Extraktionsmitteln wie Benzin, Hexan usw.

Es ist daher erforderlich, daß unter betriebsmäßigen Bedingungen die Vermischung des Extraktionsguts mit dem Extraktionsmittel (Lösemittel) in einem völlig geschlossenen System erfolgt, das jeglichen Einfluß von Luftsauerstoff sowie das Auftreten von Leckstellen ausschließt.

Insbesondere bei der Extraktion von pflanzlichen Rohstoffen, aber auch bei anderen Extraktionsprozessen der technischen Chemie geht der eigentlichen Extraktion in horizontalen oder vertikalen Extrakteuren im allgemeinen eine Zerkleinerung des Rohstoffes voraus. Hierdurch wird das Gut in eine die Extraktion begünstigende feine Verteilung (Flocken) übergeführt.

Bei der Zerkleinerung (Flockung) von Ölsaaten z. B. werden frische, d. h. oxidierbare Oberflächen freigelegt, wodurch schon vor der Extraktion erhebliche Qualitätseinbußen verzeichnet werden.

Es muß daher Sorge getragen werden, daß schon direkt im Anschluß an die Flockung der Einfluß von Sauerstoff (Luft) ausgeschlossen wird, d. h., daß der gesamte Apparatebereich zwischen Flockungsvorrichtung und Extrakteur, insbesondere aber das Gerät oder die Anlage für die Vermischung von zerkleinertem Gut und Extraktionsmittel ein vollkommen geschlossenes System bilden, das weder der Luft den Zutritt erlaubt, noch ein Austreten der Lösemitteldämpfe in die Atmosphäre gestattet.

Weiter ist es dem Fachmann geläufig, daß beim Zusammentreffen von geflocktem, d. h. zerkleinertem Rohmaterial mit dem Extraktionsmittel in Abhängigkeit von den Materialeigenschaften leicht Überhitzungen (spontaner Reaktions- bzw. Extraktionsbeginn) oder Zusammenballungen, Verklebungen usw. auftreten. Diese unerwünschten und den Verfahrensablauf in erheblichem Maße störenden Begleiterscheinungen erfordern einen optimal abgestimmten Mischprozeß zwischen zerkleinertem Extraktionsgut und Lösemittel.

Im allgemeinen verwendet man für die Vermischung Rührkessel, Transportschnecken und ähnliche Mischeinrichtungen, wobei darauf zu achten ist, daß die Mengenanteile gut geregelt und dosiert sind.

Dabei hat sich gezeigt, daß die richtige Dosierung großer Mengen äußerst schwierig ist, wobei die vorstehend abgeleiteten Probleme kaum bewältigt werden. Das zeitliche Vermischen kleiner Mengen, bei denen die vorstehend abgeleiteten Gefahren weniger auftreten, wirkt aber einschränkend auf die Wirtschaftlichkeit der Anlagenkapazität und ist daher nicht vertretbar.

Es ist die Aufgabe der Erfindung, eine Vorrichtung bzw. Anlage zur störungsfreien, kontinuierlichen Füllung von Extrakteuren zu schaffen, bei der das Vermischen von Extraktionsgut und Lösemittel auch in großen Durchsatzmengen störungsfrei verläuft, d. h., das unerwünschte Zusammenballen und Überhitzen in der Mischphase nicht auftritt, der Einfluß von Luftsauerstoff vollkommen ausgeschlossen ist, das Austreten von Lösemitteldämpfen vermieden und eine kontinuierliche, gleichmäßige Beschickung des Extrakteurs erreicht wird.

Gegenstand der Erfindung ist somit eine Vorrichtung zum störungsfreien kontinuierlichen Füllen von Extrakteuren mit Extraktionsgut und Extraktionsmittel. Die Vorrichtung besteht aus einem geschlossenen Behälter mit einem durch die obere Behälterabdeckung eingeschobenen konischen Rohr, das in einen sich erweiternden Teil ausläuft. Der Behälter ist vorwiegend kreisrund konstruiert und besteht aus einem oberen zylindrischen Teil, der nach unten in einen trichterförmigen Bereich übergeht. Der Übergang vom zylindrischen zum trichterförmigen Teil liegt etwa in der Mitte der Behälterhöhe. In diesem Bereich endet auch das konische Rohr, das an dieser Stelle seinen größten Durchmesser aufweist. Oberhalb des Behälterdeckels erweitert sich das konische Rohr und nimmt hier einen seitlich eingeführten Schacht auf, durch den das Extraktionsgut eingebracht wird. Ein Anschlußstutzen im oben erweiterten Teil des konischen Rohrs dient zur Ableitung der mit dem Extraktionsgut eingebrachten Luft. Zentrisch im konischen Rohr ist eine Antriebsachse gelagert, die in einen rotierenden Teller übergeht und diesen bewegt. Der Rührteller liegt ebenfalls etwa auf der Höhe des Übergangs des zylindrischen Behälterteils in den unteren trichterförmigen Behälterteil. Der Behälter ist mit einer Reihe von Rohranschlüssen versehen, durch die — in Verbindung mit der Drehgeschwindigkeit des Rührtellers und der Menge eingebrachten Extraktionsguts — die Behälterfüllung geregelt werden kann. Die Rührachse ist durch mehrere Arme am oberen Ende des konischen Rohrs gehalten, die Haltearme sind ihrerseits an ein Übersetzungsgetriebe angeschlossen, das zum Antriebsmotor für die Rührwelle weiterleitet. Die Drehzahl des Antriebsmotors bestimmt die Menge des auf dem Drehteller vorhandenen Extraktionsguts. Diese Menge wird durch eine elektrische Waagezelle kontinuierlich gemessen, deren Ergebnis die Menge des durch den seitlichen Schacht eintretenden Extraktionsguts bestimmt. Die Anlage arbeitet voll kontinuierlich und regelt eine konstante Füllhöhe aus Extraktionsgut und Extraktionsmedium.

Durch die Arbeitsweise der erfindungsgemäßen Vorrichtung wird dem angeschlossenen Extrakteur beliebiger Bauweise eine absolut homogene Mischung angeboten, die keine oxidierten Bestandteile enthält und aus einem mit Lösemittel gleichmäßig durchtränkten Rohmaterial besteht.

Insgesamt gesehen kann die neue Vorrichtung zum kontinuierlichen Füllen von Extrakteuren auch mit diesen zu einer Einheit vereinigt werden, wozu es lediglich notwendig ist, den Entleerungsstutzen am Auslauf des trichterförmigen Teils des Behälters direkt mit dem Eingang des Extrakteurs zu vereinigen.

Von besonderer technischer Bedeutung und entscheidend für eine optimale Arbeitsweise ist bei der neuen Füllvorrichtung für Extrakteure gemäß der Erfindung die völlige Ausschließung von Luftsauerstoff im Bereich des Zusammentretens von Extraktionsgut und Extraktionsmedium und das absolut regelbare Mischungsverhältnis von Extraktionsgut und Extraktionsmedium durch den Konstruktiven Aufbau, insbesondere durch die Form des Behälters, die Regelbarkeit der Rührgeschwindigkeit in Verbindung mit der Rohmaterialeinspeisung, die Regelbarkeit der Umwälzgeschwindigkeit und -menge des Extraktionsmediums und — damit insgesamt — die Regelung der Füllhöhe im Behälter selbst.

Aus dem Stand der Technik ist ein derartiges System bisher nicht bekannt. Vielmehr erfolgt das Vermischen der Reaktanten entweder in normalen eingängigen Schnecken wie z. B. bei der GB-A-1 147 709 und der GB-A-1 250 343 oder in einem das Gut bzw. Gemisch nur transportierenden System wie bei der US-A-2 582 675.

Erst durch die erfindungsgemäße Konstruktion des Füll- und Ausgleichsbehälters mit ganz spezifischen Anschlußsystemen für Lösemittel, Lösemittelüber- bzw. -rücklauf, Druckausgleich, Luftauslaß usw. an ganz bestimmten Stellen des Behälters, mit einem ganz spezifischen Rührwerksaufbau und dessen Anordnung gelingt es, ein vollkommen abgeschlossenes, kontinuierlich arbeitendes System zu schaffen.

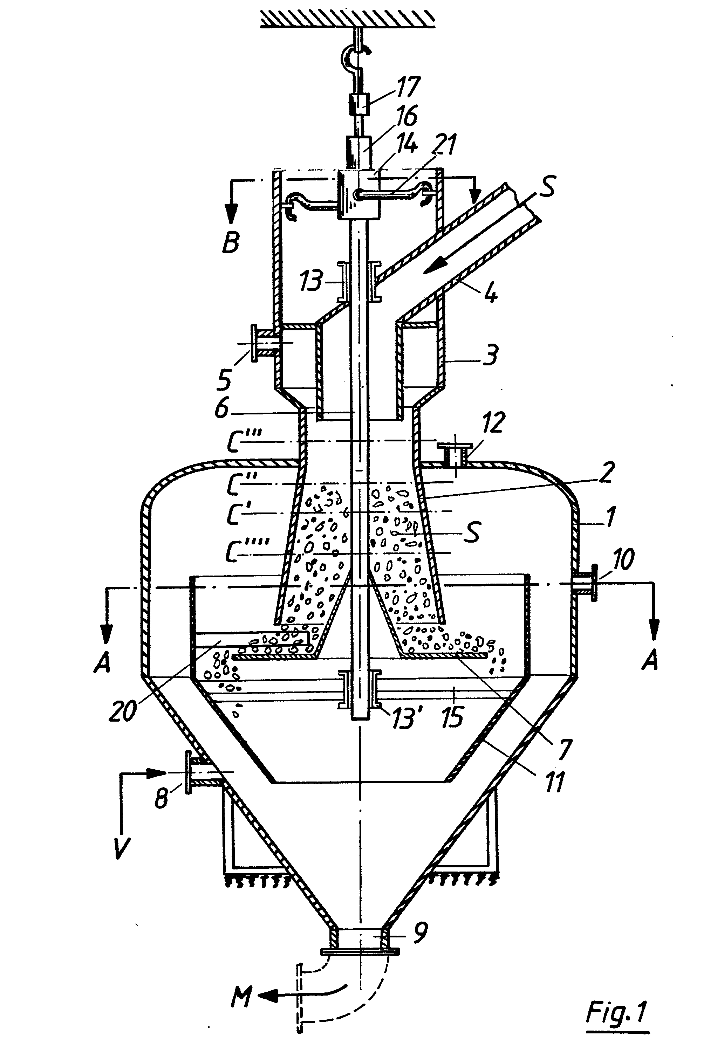

Die neue Vorrichtung zur störungsfreien und kontinuierlichen Beschickung von Extrakteuren mit zu behandelndem Extraktionsgut und Extraktionsmedium wird anschließend unter Bezugnahme auf die Figuren 1-3 näher beschrieben.

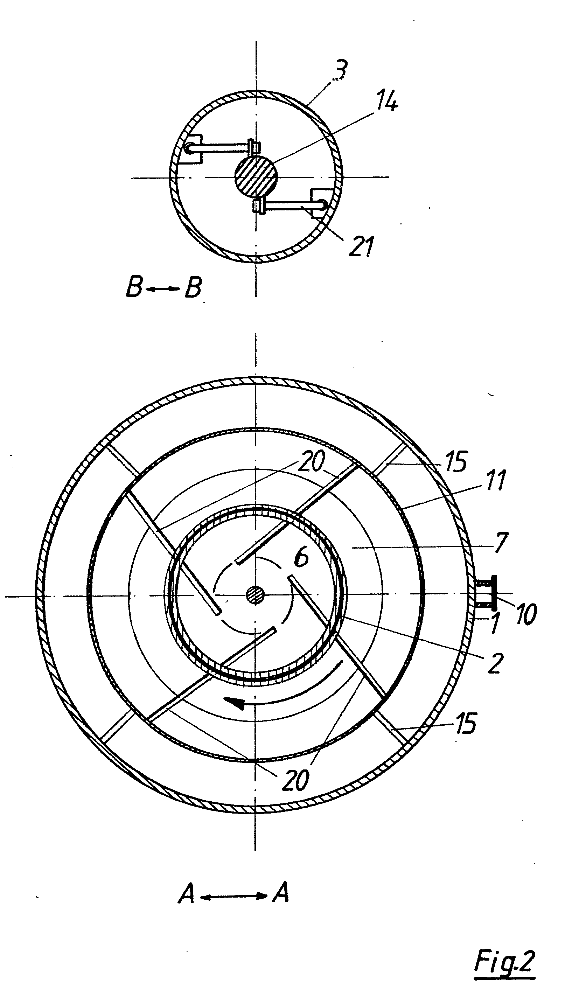

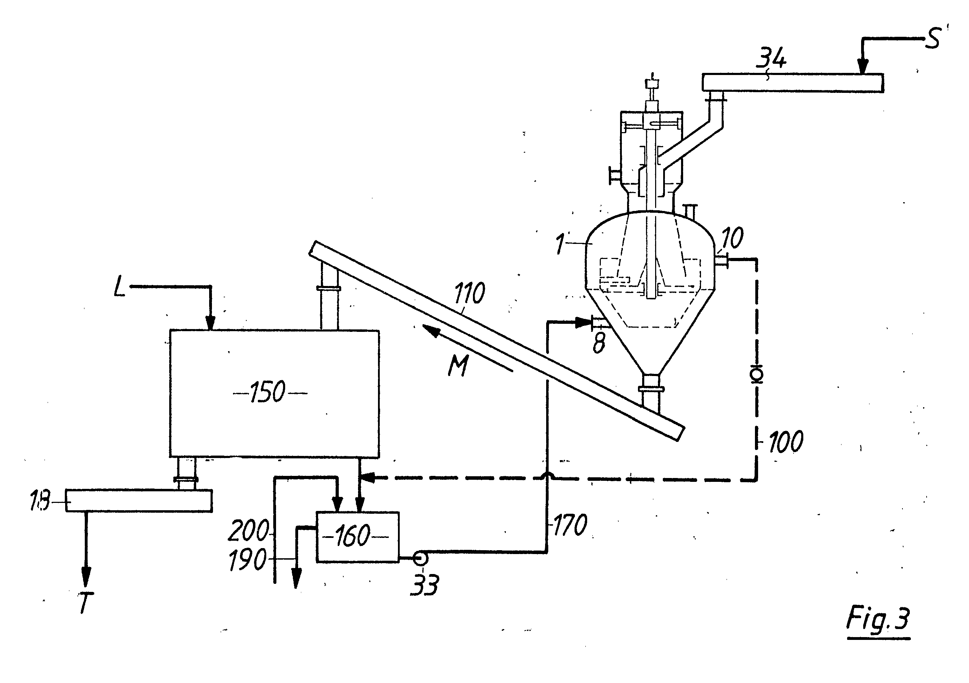

Dabei zeigt Fig. 1 den Aufbau der Vorrichtung im Aufriß, Fig. 2 die Horizontalschnitte (B-B) und (A-A) nach Fig. 1 und Fig. 3 die wesentlichen Elemente einer Extraktionsanlage, in die die neue Vorrichtung eingeschaltet ist.

Gemäß Fig. 1 besteht die neue Vorrichtung zum störungsfreien und kontinuierlichen Beschicken von Extrakteuren aus dem eigentlichen Behälter (1), der sich aus einem oberen, vorwiegend zylindrischen und einem unteren, vorwiegend trichterförmigen Teil aufbaut. Zylinder und Trichter nehmen je etwa die Hälfte der Behälterhöhe ein. Durch den Deckel des oberen zylindrischen Teils des Behälters (1) führt ein konisches Rohr, das sich unterhalb des Deckels zum Teil (2) erweitert. Das konische Rohr endet etwa im unteren Drittel des zylindrischen Teils des Behälters (1). Oberhalb des Deckels des Behälters geht das konische Rohr in eine Erweiterung (3) über. In Fig. 1 kann somit das konische Rohr insgesamt mit (2, 3) bezeichnet werden. Ein seitlich eintretender Schacht (4) zur Einbringung des Extraktionsguts (S) mündet in die Erweiterung (3) des Rohrs (2, 3). Eine Rührwelle (6), die in Radiallagern (13, 13') gehalten ist, trägt an ihrem unteren Ende einen Tellerrührer (7). Dieser bewegt sich unterhalb des Endes des Rohres (2, 3), jedoch oberhalb der Trennlinie zwischen zylindrischem und trichterförmigem Teil des Behälters (1). Die Oberfläche des Tellers (7) und das Ende des Rohrs (2, 3) bilden einen Spalt aus, über den das Extraktionsgut in den unteren Teil des Behälters (1) fällt. Konzentrisch zur Rührwelle (6) befindet sich im Abstand ein Innenschirm (11), der bis in den trichterförmigen Teil des Behälters (1) hineinreicht. Die Funktion dieses Schirms wird später erläutert. An diesem Schirm sind sowohl Haltearme (15) für das Radiallager (13') als auch Entnahmeschaber (20) befestigt. Letztere sorgen dafür, daß das auf dem Rührteller (7) befindliche Gut (S) ohne Behinderung durch Klumpenbildung oder Stauungen nach unten fallen kann.

Die Funktionen der einzelnen Anschlußstutzen gemäß Fig. 1 sind folgende : Durch den Stutzen (5) wird die mit dem Extraktionsgut (S) durch den Schacht (4) eingebrachte Luft kontinuierlich abgesaugt. Stutzen (12) leitet zu einer Druckausgleichsleitung über (nicht dargestellt) an der alle Apparate der Gesamtanlage wie Extrakteur, Lösemittel-Wasser-Trennvorrichtung, Filter usw. anliegen. Stutzen (9) dient zur Ableitung der in der erfindungsgemäßen Vorrichtung gebildeten Suspension aus Extraktionsgut und Extraktionsmedium. Im allgemeinen leitet eine an den Stutzen (9) angeschlossene Leitung die Suspension (M) über eine geeignete Pumpe direkt zum Extrakteur weiter oder der Stutzen (9) ist auf eine geeignete Förderschnecke (vgl. Fig. 3) aufgesetzt, die ihrerseits die Suspension (M) in den Extrakteur einbringt.

Bei (8) tritt Lösemittel bzw. Extraktionsgut, z. B. eine Miscella (V) in den Behälter (1) ein. Die Menge eintretenden Extraktionsmediums ist gemäß den Merkmalen der Erfindung größer als diejenige Menge, die bei (9) zusammen mit Extraktionsgut als Suspension abgenommen wird. Hierdurch bedingt, steigt der Spiegel des Extraktionsmediums bzw. der Suspension in Behälter (1) an. Die Differenz aus bei (8) eintretendem Extraktionsmedium und bei (9) austretendem Extraktionsmedium fließt — wie noch abgeleitet wird — in geregeltem Maße über den Stutzen (10) ab und bildet (vgl. Fig. 3) zusammen mit dem Extraktionsmedium einen Kreislauf.

Entscheidend für die Funktion der neuen Füllvorrichtung ist die Aufrechterhaltung der Niveauhöhen (C'-C") für das zu extrahierende Gut (S). Erreicht dessen Füllhöhe den Stand (C''') oder (C''''), die Maximal- und Minimal-Zustände darstellen, so werden die Zufuhrorgane für Extraktionsgut (S) oder die Drehbewegung der Rührwelle entsprechend reduziert, was gelegentlich zum vollkommenen, jedoch nur kurzfristigen Stillstand des Rührers oder der Materialaufgabe (S) führen kann. Der Stand des Extraktionsmediums (V) im Behälter (1) wird grundsätzlich durch die Linie (A-A) bestimmt, was durch den Überlauf (10) geregelt ist.

Selbstverständlich erfolgt die Regelung des Niveaus des Extraktionsguts (S) über den Bereich der Linien (C')-(C'''') sowie der Stand des Extraktionsmediums (V) elektronisch. Die Angaben von Einzelheiten hierzu erübrigt sich, da dieselben nicht Gegenstand der Erfindung sind.

Der zentrisch um das Rohr (2, 3) im mittleren Bereich des Behälters (1) angeordnete Schirm (11) hat die Aufgabe, daß das bei (8) eintretende Extraktionsmedium nicht direkt mit dem trockenen Extraktionsgut (S) in (2) in Berührung kommt. Vielmehr fließt das Extraktionsmedium (V) zunächst unter dem Druck eines geeigneten Förderelements, z. B. einer Pumpe (33) — Fig. 3 — gegen den Schirm (11) wodurch eine Verteilung des Mediums (V) erfolgt.

Die Rührwelle (6) ist durch zwei Radiallager (13, 13') gehalten. Sie wird vom Motor (16) angetrieben. Die Drehzahl der Welle (6) wird durch ein Untersetzungsgetriebe (14) geregelt. Das Drehmoment des Getriebes (14) wird tangential durch die Haltearme (21) in flexibler Bauart aufgefangen, um eine volle axiale Freiheit zur Wiegezelle (17) zu belassen, die ihrerseits kontinuierlich die Menge des auf dem Drehteller (7) liegenden Gewichts des Extraktionsguts (S) ermittelt und an eine — nicht dargestellte — Regelstation weiterleitet.

Die Figur 2 zeigt im Schnitt die Konstruktion der neuen Füllvorrichtung einmal im Bereich (B-B) nach Fig. 1 und zum anderen im Bereich (A-A) nach Fig. 1 Wie aus dem Schnitt (A-A) ersichtlich ist, sind die Entnahmeschaber (20) versetzt angeordnet, so daß das vom Teller (7) fallende Gut in Drehrichtung des Tellers (7) zum Zwischenraum zwischen Schirm (11) und äußerer Begrenzung des Tellers (7) gefördert wird.

Figur 3 zeigt schematisch den Aufbau einer Gesamtanlage für die Extraktion z. B. von Saatgut, insbesondere von Sojamaterial mit Hilfe von Hexan, das als bevorzugtes Extraktionsmittel in diesem Bereich verwendet wird.

Die nach bekannten Verfahren durch geeignete Zerkleinerungsvorrichtungen erzeugten Sojaflocken (S) gelangen über ein geeignetes Fördersystem (34), z. B. eine Wiegewalze, eine Schnecke mit gesteuerter Geschwindigkeit usw. in die Füllvorrichtung (1), die im einzelnen vorstehend beschrieben ist. Über eine Förderschnecke (110) wird die in (1) gebildete Suspension (M) aus Sojaflocken und Hexan kontinuierlich dem Extrakteur (150) zugeführt. Dessen Aufbau ist für die hier beschriebene Anlage ohne Bedeutung. Die neue Füllvorrichtung ist für jeden bekannten Extrakteur geeignet.

Über geeignete Zuführorgane wird der Extrakteur (150) mit Lösemittel (L) im speziellen Falle mit Frischhexan beschickt. Die gebildete Miscella wird im Tank (160) aufgefangen und über eine Pumpe (33) und Leitung (170) kontinuierlich zum Eintrittsstutzen (8) der Füllvorrichtung (1) zurückgeführt. Ein geeignetes Überlaufsystem (200), (190) erlaubt sowohl die Abnahme von Miscella aus dem Kreislauf, als auch die Aufrechterhaltung eines geregelten Miscellaspiegels im Tank (160). Der Rückstand der Extraktion verläßt den Extrakteur über eine geeignete Förderschnecke (18) und wird z. B. zu einem Toaster (T) weitergeleitet.

Die über den Stutzen (10) abfließende Miscella gelangt über Leitung (100) zum Tank (160) und bleibt somit in ständigem Kreislauf.

Es versteht sich, daß die Leitungen (100, 170) alle erforderlichen Hilfselemente wie Schaugläser, Ventile usw. enthalten, auf deren Wiedergabe hier jedoch verzichtet werden kann.

Bei bisher bekannt gewordenen Extrakteur-Füllvorrichtungen wird zusammen mit dem Extraktionsgut in erheblichem Maße immer noch Luftsauerstoff in den Extraktionsraum eingetragen. Dies macht es notwendig, daß das gesamte System über Entlüftungseinheiten mit umfangreichen Benzinrückgewinnungsanlagen verbunden ist. Die in bekannten Extraktionsanlagen zusammen mit dem Extraktionsgut eingebrachte Luft kann sich je nach Temperatur bis auf 3 kg/m³ Abluft mit Extraktionsmittel, insbesondere Hexan, aufsättigen, das sowohl aus wirtschaftlichen als auch aus sicherheitsbedingten Gründen aus der Abluft zurückgewonnen werden muß.

Lösemittelrückgewinnungsanlagen erfordern aber neben hohen Investitionen umfangreiche Wartung und einen äußerst komplexen Apparateaufbau. Ihre Gefahr für die Umwelt ist hinreichend bekannt. Betriebsunfälle durch Ausbildung explosiver Gemische aus verdampftem Lösemittel und Luft sind keine Seltenheit.

Durch die Maßnahmen der Erfindung entfallen derartige Lösemittelrückgewinnungsanlagen. Damit wird insgesamt die Sicherheit von Extraktionsanlagen mit Lösemitteln verbessert.

Es sei schließlich daran erinnert, daß Betriebsstörungen im Extrakteur zu erheblichen Überdrucken führen können. Diese Drucke genügen, um Lösemittelgase durch das Leitungssystem und bekannte Füllvorrichtungen bis in die Saatgutaufbereitung zurückzuführen, wo hierdurch bedingte Explosionen und Brände nicht selten sind.

Durch die Maßnahmen der Erfindung werden Lösemittelverluste vollkommen vermieden, desgleichen durch den Sauerstoffausschluß jegliche Apparatekorrosion verhindert.

**Ansprüche**

1. Vorrichtung zum störungsfreien kontinuierlichen Füllen von Extrakteuren mit Extraktionsgut und Extraktionsmedium unter Ausbildung einer Suspension der Reaktanten bei völligem Ausschluß von Luftsauerstoff und Vermeidung des Auftretens von Lösemitteldämpfen im Bereich der Anlage, gekennzeichnet durch einen Behälter (1), der sich aus einem oberen zylindrischen und einem unteren trichterförmigen Teil zusammensetzt, ein durch den Deckel des Behälters (1) geführtes konisches Rohr, das sich unterhalb des Deckels des Behälters (1) erweitert (2) und etwa im unteren Drittel des zylindrischen Teils des Behälters (1) endet und oberhalb des Deckels des Behälters (1) in eine Erweiterung (3) übergeht, in die ein seitlicher Schacht (4) zur Einbringung des Extraktionsguts (S) mündet, eine Rührwelle (6) mit unten angesetztem Drehteller (7) oberhalb der mittleren Höhe des Behälters (1) aber unterhalb des konischen Rohres, einen Innenschirm (11) im mittleren Bereich des Behälters (1), mehreren radialen Entnahmeschabern (20) oberhalb des Drehtellers (7), Einführstutzen (8) für Extraktionsmedium (V), Ablaßstutzen (9) für Suspension (M) aus Extraktionsgut und Extraktionsmedium, Überlaufstutzen (10) für die Aufrechterhaltung eines gleichmäßigen Suspensionsspiegels, mindestens zwei Radiallager (13, 13') für die Rührwelle (6) mit Haltearmen (15), Stutzen (5) zur Ableitung der vom Extraktionsgut eingeschleppten Luft, Druckausgleichsstutzen (12) sowie ein aus Motor (16), Untersetzungsgetriebe (14) mit tangentialen Haltearmen (21) und Wiegezelle (17) bestehendes flexibles und regelbares Antriebs- und Wägesystem für den Rührteller (7) und das auf ihm liegende Extraktionsgut.

2. Verwendung der Vorrichtung nach Anspruch 1 als Füll- und Ausgleichsbehälter für Extrakteure in Anlagen zur Extraktion von Sojamaterial mit Lösemitteln, insbesondere mit Hexan.

## Claims

1. Apparatus for the trouble-free continuous feeding of extractors with material to be extracted and extractant while a suspension of the reactants is formed under conditions absolutely excluding atmospheric oxygen and without the occurrence of solvent vapors in the region of the plant, characterized by a vessel (1) composed of an upper cylindrical portion and a lower funnel-shaped portion, a conical tube extending through the cover of the vessel (1), said conical tube being flared (2) below the cover of the vessel (1) and terminating approximately in the lower third of the cylindrical portion of the vessel (1) and passing, above the cover of the vessel (1), into an enlarged-diameter portion (3), a lateral chute (4) for the feed of material to be extracted (S) opening into said enlarged-diameter portion (3), an agitator shaft (6) having a rotary disc (7) attached to the lower end thereof and disposed above the middle of the height of the vessel (1) but below the conical tube, an inner screen (11) in the middle region of said vessel (1), a plurality of radial dislodging scrapers (20) above the rotary disc (7), inlet connection means (8) for extractant (V), outlet connection means (9) for suspension (M) formed of material to be extracted and extractant, overflow connection means (10) for maintaining a constant level of suspension, at least two radial bearings (13, 13') for the agitator shaft (6) with supporting arms (15), connection pipe means (5) for leading away the air brought in by the material to be extracted, pressure equalization connection means (12) as well as a flexible and controllable driving and weighing system for the rotary disc (7) and the material to be extracted disposed thereon, said driving and weighing system consisting of motor means (16), reduction gearing (14) with tangential supporting arms (21) and weighing cell (17).

2. Use of the apparatus according to claim 1 as a feeding and equalizing vessel for extractors in plants for the extracting of soy material with solvents, particularly with hexane.

## Revendications

1. Dispositif pour le remplissage continu et sans perturbation d'extracteurs en matière d'extraction et agents d'extraction avec formation d'une suspension des corps réagissants, tout en excluant complètement l'oxygène de l'air et en évitant la présence de vapeurs de solvant dans le domaine de l'installation, ledit dispositif étant caractérisé en ce qu'il comprend un récipient (1) qui est constitué par une partie cylindrique supérieure et une partie inférieure en forme d'entonnoir, un tube conique passant au travers du couvercle du récipient (1), qui s'élargit (2) en dessous du couvercle du récipient (1) et se termine sensiblement dans le tiers inférieur de la partie cylindrique du récipient (1) et se transforme au-dessus du couvercle du récipient (1) par un élargissement (3) dans lequel débouche une cheminée latérale (4) pour l'introduction de la matière d'extraction (S), un arbre d'agitateur (6) avec en bas un plateau tournant (7) situé au-dessus de la hauteur médiane du récipient (1), mais en dessous du tube conique, un écran intérieur (11) placé dans la région moyenne du récipient (1), plusieurs racloirs radiaux d'enlèvement (20) disposés au-dessus du plateau tournant (7), une tubulure d'introduction (8) pour l'agent d'extraction (V), une tubulure d'évacuation (9) pour la suspension (M) de matière d'extraction et d'agent d'extraction, une tubulure de trop-plein (10) pour le maintien d'un niveau de suspension régulier, au moins deux paliers radiaux (13, 13') pour soutenir l'arbre d'agitateur (6) avec des bras supports (15), une tubulure (5) pour l'évacuation de l'air entraîné avec la matière d'extraction, une tubulure d'équilibrage de pression (12) ainsi qu'un système d'entraînement et de pesée, flexible et réglable, qui est constitué par le moteur (16) et un mécanisme de réduction (14) avec des bras de maintien tangentiels (21) et une cellule de pesée (17), pour le plateau agitateur (7) et la matière d'extraction reposant sur lui.

2. Utilisation du dispositif selon la revendication 1 comme récipient de remplissage et d'équilibrage pour des extracteurs, dans des installations pour l'extraction de matière de soja avec des solvants, en particulier avec de l'hexane.

0 047 333

*Fig.1*

*B* ← → *B*

*A* ← → *A*

Fig.2

2

Fig.3

0 047 333